# EUROPÄISCHE PATENTSCHRIFT

(11) **EP 0 825 702 B1**
(45) Veröffentlichungstag und Bekanntmachung des Hinweises auf die Patenterteilung: **27.02.2002**
(21) Anmeldenummer: 97810434.7
(22) Anmeldetag: 02.07.1997
(51) Int. Cl.: H02J 9/06

(54) **Anordnung und Verfahren zum Betreiben einer magnetgelagerten, elektromotorischen Antriebsvorrichtung bei einer Netzstörung**
Device and method for the operation of the drive circuitry of an electric motor with magnetic bearings during a power failure
Méthode et dispositif pour le fonctionnement d'un circuit de commande d'un électromoteur avec des paliers magnétiques pendant une panne de courant

(30) Priorität: 25.07.1996 EP 96810493
(43) Veröffentlichungstag der Anmeldung: 25.02.1998
(73) Patentinhaber: Lust Antriebstechnik GmbH, 35633 Lahnau (DE)
(72) Erfinder: Gerster, Christoph, Dr., 8037 Zürich (CH); Schöb, Reto, Dr., 8604 Volketswil (CH); Gempp, Thomas, 4153 Reinach (CH)
(74) Vertreter: Heinen, Detlef

(56) Entgegenhaltungen:
- EP-A- 0 430 009
- DE-A- 4 306 307
- DE-A- 19 506 849
- FR-A- 2 336 819
- PATENT ABSTRACTS OF JAPAN Vol. 95, Nr. 011 & JP 07 293 563 A (EBARA CORP) 07 November 1995
- PATENT ABSTRACTS OF JAPAN Vol. 95, Nr. 005 & JP 07 127 594 A (SHIMADZU CORP) 16 Mai 1995
- PATENT ABSTRACTS OF JAPAN Vol. 013, Nr. 295 (E-783) 07 Juli 1989 & JP 01 074 081 A (HITACHI LTD) 20 M{rz 1989

## Beschreibung

Die Erfindung betrifft ein Verfahren zum Betreiben einer magnetgelagerten, elektromotorischen Antriebsvorrichtung gemäss den Oberbegriff von Anspruch 1.

Es ist bekannt, rotierende Vorrichtungen wie Elektromotoren durch aktive, elektrisch angesteuerte Magnetlager berührungsfrei zu lagern. Solche Vorrichtungen erfordern aufwendige Sicherungsvorrichtungen gegen Netzunterbrüche, um bei einem Stromausfall einen unkontrollierbaren und abrupten Abbau der magnetischen Lagerkraft zu verhindern.
Aus der EP 0 430 009 ist eine Anordnung bekannt, welche beim Auftreten eines Stromunterbruches einen magnetisch gelagerten Rotor sicher zum Stillstand bringt. Diese Anordnung verwendet als Hilfsenergiequelle Batterien, welche bei einem Stromunterbruch aktiviert werden, um die elektromagnetischen Lager sowie die Ansteuerelektronik bis zum sicheren Stillstand des Rotors mit elektrischer Energie zu versorgen. Eine derartige Hilfsenergiequelle weist den Nachteil auf, dass sie relativ teuer ist, insbesondere wenn der Rotor relativ schwer ausgestaltet ist. Ein weiterer Nachteil ist darin zu sehen, dass die Hilfsenergiequelle einen ständigen Wartungsaufwand erfordert.

Aus der DE-A-195 06 849 ist ein Stromversorgungsschaltkreis für ein Magnetlagersystem bekannt, bei welchem während eines Stromausfalls regenerativ elektrische Energie von einem Motor über einen Inverter an einen DC/DC-Konverter geliefert wird. Der DC/DC-Konverter versorgt dann die Magnetlagerung und den Magnetlager-Kontrollschaltkreis mit Energie, sodass der Betrieb des Magnetlagersystems aufrecht erhalten bleibt.

In der DE-A-43 06 307 wird ein Verfahren zur Schadensverhütung an numerisch gesteuerten Maschinen bei Netzausfall offenbart. Es wird vorgeschlagen, die kinetische Energie eines Hauptspindelantriebs bei Netzausfall geregelt in den Zwischenkreis zurückzuspeisen und einen dann einen Notrückzug der Werkzeugspindel durchzuführen.

In der JP-A-07127594 wird vorgeschlagen, einen magnetisch gelagerten Rotor bei einem Netzausfall durch einen speziellen Ablege-Schaltkreis kontrolliert in Fanglager abzulegen. Als Energieversorgung für das Ablegen des Rotors wird eine externe Batterie vorgeschlagen.

Es ist Aufgabe der vorliegenden Erfindung, ein Verfahren zum Betreiben einer magnetgelagerten, elektromotorischen Antriebsvorrichtung bei Netzstörungen vorzuschlagen, welches wirtschaftlich vorteilhafter ausgestaltet ist.

Die Aufgabe wird gelöst mit einem Verfahren gemäss den Merkmalen von Anspruch 1. Die Unteransprüche beziehen sich auf weitere, vorteilhafte Ausgestaltungen des Verfahrens.

Eine für das erfindungsgemässe Verfahren geeignete Anordnung zum Betreiben einer magnetgelagerten, elektromotorischen Antriebsvorrichtung bei einer Netzstörung weist einen die Antriebsvorrichtung speisenden Antriebsumrichter, eine ein Magnetlager speisende Stellvorrichtung sowie einen Spannungswandler auf, welche an einem gemeinsamen Zwischenkreis angeschlossen sind, wobei der Spannungswandler eine Anhaltesteuervorrichtung speist, und wobei beim Auftreten einer Netzstörung der Antriebsumrichter durch die Anhaltesteuervorrichtung in einen regenerativ wirkenden Arbeitsmodus umschaltbar ist, um zumindest die das Magnetlager speisende Stellvorrichtung und die Anhaltesteuervorrichtung über den Zwischenkreis mit elektrischer Energie zu versorgen.
Beim Auftreten eines Netzausfalles oder einer Netzunterspannung wird somit die im rotierenden Teil gespeicherte kinetische Energie mit Hilfe der elektromotorischen Antriebsvorrichtung sowie des Antriebsumrichters teilweise in elektrische Energie umgewandelt, um einerseits den rotierenden Teil schnell abzubremsen, und um andererseits mit der erzeugten elektrischen Energie zumindest die Magnetlager sowie eine Anhaltesteuervorrichtung bis zum sicheren Anhalten und Ausserbetriebsetzen der Antriebsvorrichtung weiterhin zu betreiben. Bei einer sehr kurzfristig auftretenden Netzstörung, wie einer kurzen Netzunterspannung, wird der Antriebsumrichter durch die Anhaltesteuervorrichtung in einen regenerativ wirkenden Arbeitsmodus umgeschalten, um zumindest für den Betrieb der Magnetlager genügend elektrische Energie zur Verfügung zu stellen. Sofern die Netzstörung derart kurzfristig ausfällt, dass der rotierende Teil der Antriebsvorrichtung bei der Rückkehr des Netzes in einen Normalzustand immer noch magnetisch gelagert ist, wird die Anhaltesteuervorrichtung den Antriebsumrichter in einen antreibend wirkenden Arbeitsmodus umschalten, um den Motor wieder auf eine Nenndrehzahl zu bringen. Somit können sehr kurzfristig dauernde Netzstörungen überbrückt werden, ohne die Antriebsvorrichtung vollständig abzubremsen und die rotierende Welle in eine Ruhelage abzusenken.

Ein Vorteil der Erfindung ist darin zu sehen, dass die Magnetlager sowie die Ansteuerelektronik der elektromotorischen Antriebsvorrichtung bei einem Netzunterbruch weiterhin mit elektrischer Energie versorgt werden, ohne die Notwendigkeit von teuren Batteriespeichern oder sonstigen externen Energiespeichern.

Der die Antriebsvorrichtung speisende Antriebsumrichter ist derart ausgestaltet und wird derart geregelt, dass die Antriebsvorrichtung regenerativ abbremsbar ist, indem dem rotierenden Teil des Motors Rotationsenergie entzogen wird, und die daraus regenerativ erzeugte elektrische Energie über den gemeinsamen Zwischenkreis den Magnetlagern zur Verfügung steht. Somit steht, zumindest so lange der rotierbare Teil sich dreht, elektrische Energie für die magnetischen Lager zur Verfügung, um eine tragende magnetische Kraft zu erzeugen.

Der Antriebsumrichter sowie die elektromotorische Antriebsvorrichtung werden mit einer Antriebsreglungsvorrichtung gesteuert, die als Vektorregelungsvorrichtung ausgebildet ist und den Betrieb nach einem Vektorregelverfahren bzw. einer feldorientierten Regelung steuert, was den rotierenden Teil bis zu einer Drehzahl von Null oder zumindest annähernd Null abzubremsen erlaubt, wobei dem rotierenden Teil ständig Energie entzogen wird. Mit der Vektor- bzw-feldorientierten Regelung ist es möglich, auch bei einer Netzstörung bzw. einem Netzunterbruch die Spannung im Zwischenkreis auf einen im Vergleich zum normalen Betriebszustand gleich grossen oder sogar grösseren Wert zu regeln, und diese Spannung im Zwischenkreis zumindest solange aufrechtzuerhalten bis entweder die Drehzahl des rotierenden Teils auf Null oder annähernd Null gesenkt ist, oder bis die Netzspannung wieder zur Verfügung steht.

Das Vektorregelverfahren bzw. die feldorientierte Regelung ist ein an sich bekanntes Verfahren,zum Beispiel aus dem Buch "Vector-Control of AC-Machines, Peter Vas, Clavendon-Press, Oxford, 1990". Auch wird beispielsweise in dem Buch "Digitale Regelung elektrischer Antriebe", Rolf Schönfeld, Dr. Alfred Hüthig Verlag, Heidelberg, 1988 das Verfahren der feldorientierten Steuerung behandelt.

Die Begriffe Vektorregelung und feldorientierte Regelung werden üblicherweise mit der gleichen Bedeutung verwendet. Deshalb ist auch im folgenden der Begriff "Vektorregelung" als Synonym für den Begriff "feldorientierte Regelung" zu verstehen.

Der Antriebsumrichter, die die Magnetlager speisenden Stellvorrichtungen sowie der Spannungwandler für die Anhaltesteuervorrichtung, welche über den Zwischenkreis miteinander verbunden sind, sind als getaktete Stellglieder ausgestaltet, und weisen jeweils einen Energiespeicher, üblicherweise als Kondensator ausgestaltet, auf. Die darin gespeicherte Energie wird vorteilhafterweise verwendet, um nach dem Stillstand des Rotors noch weitere Regelschritte auszuführen. In einer besonders vorteilhaften Ausgestaltung der Erfindung wird die im Zwischenkreis nach dem Stillstand der Antriebsvorrichtung noch verfügbare Energie derart bemessen, dass einer Anhaltesteuervorrichtung noch genügend Energie zum Absenken des Rotors in eine definierte Ruhelage zur Verfügung steht. In einer vorteilhaften Ausgestaltung der Erfindung wird der Antriebsumrichter während dem regenerativ wirkenden Arbeitsmodus derart als gesteuerter Gleichrichter betrieben, dass die an den Zwischenkreis zurückgespeiste Spannung der bisher am Zwischenkreis anliegenden Spannung entspricht oder diese sogar übersteigt. Während dem Umkehrbetrieb des Antriebsumrichters wird damit aus der tieferen Motorspannung der Antriebsvorrichtung eine höhere Zwischenkreisspannung erzeugt. Diese erhöhte Zwischenkreisspannung ist dank der verwendeten Vektorregelung über einen grossen Drehzahlbereich der Antriebsvorrichtung, bis annähernd zum Stillstand des Rotors, erzeugbar. Ein Vorteil dieser Anordnung ist darin zu sehen, dass die mit dem Zwischenkreis verbundenen Energiespeicher wie Kondensatoren beim Stillstand des Rotors eine annähernd maximal mögliche Energie gespeichert haben, welche nach dem Stillstand zum kontrollierten Ausserbetriebsetzen bzw. Ausschalten der Magnetlager zur Verfügung steht. Vorteilhafterweise steht der Anhaltesteuervorrichtung und den Stellvorrichtungen der Magnetlager noch mehrere Sekunden nach dem Stillstand des Rotors elektrische Energie zur Verfügung, um ein kontrolliertes Absenken des Rotors und ein kontrolliertes Abschalten der Anordnung zu erlauben.

Die Antriebsvorrichtung ist vorzugsweise als eine elektrische Maschine, wie eine Synchronmaschine, eine Asynchronmaschine bzw. eine Induktionsmaschine, eine bürstenlose Gleichstrommaschine oder eine Reluktanzmaschine ausgestaltet. Die Anhaltevorrichtung kann auch als ein Teil des Antriebsumrichters ausgestaltet sein.

Die Erfindung wird an Hand eines Ausführungsbeispieles im Detail beschrieben. Es zeigen:
- Fig. 1: eine schematische Darstellung einer Anordnung zum Durchführen des erfindungsgemässen Verfahrens
- Fig. 2: der zeitliche Verlauf relevanter Grössen während einem Anhaltevorgang;
- Fig. 3: der zeitliche Verlauf relevanter Grössen während einer sehr kurzfristigen Netzstörung.

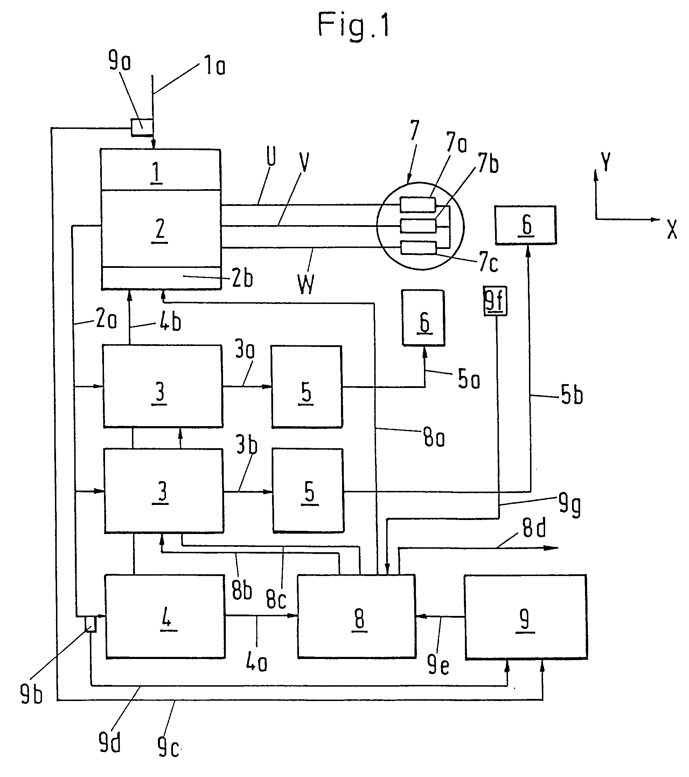

Fig. 1 zeigt schematisch ein Ausführungsbeispiel einer Anordnung zum Durchführen des erfindungsgemässen Verfahrens. Ein Netzgleichrichter 1 wird von einem ein- oder dreiphasig ausgestalteten elektrischen Netz 1a gespiesen. Die im Netz anliegende Spannung wird von einem Spannungssensor 9a überwacht und über eine Signalleitung 9c einer Überwachungsvorrichtung 9 zugeführt, welche das Auftreten eines Netzunterbruches überwacht. Ein Antriebsumrichter 2 bezieht vom Netzgleichrichter 1 die elektrische Energie und wird von einer Antriebsregelungsvorrichtung 2b derart angesteuert, dass die elektromotorische Antriebsvorrichtung 7, im vorliegenden Beispiel als eine dreiphasige Asynchronmaschine 7 mit drei Spulen 7a,7b,7c ausgestaltet, über die drei elektrischen Zuleitungen U,V,W phasengerecht mit elektrischem Strom versorgt wird. Der Antriebsumrichter 2 speist zudem über einen gemeinsamen Gleichstromzwischenkreis 2a zwei Magnetlagersteller 3 sowie einen Spannungswandler 4. Der Magnetlagersteller 3, auch als ein Magnetlagerverstärker bezeichnet, speist über eine elektrische Leitung 3a,3b,5a,5b ein Magnetlager 6. Im dargestellten Ausführungsbeispiel sind zwei Magnetlager 6 dargestellt, ein in vertikaler Richtung Y und ein in horizontaler Richtung X wirkendes, um die rotierende Welle der Asynchronmaschine 7 an einer Lagerstelle berührungsfrei zu lagern. Nicht dargestellt sind Sensorelemente zur Erfassung der Lage der rotierenden Welle, deren Werte dem Magentlagersteller 3 zugeführt sind, um einen Regelkreis auszubilden und die Welle geregelt in einer vorgebbaren Lage zu halten. Die elektromotorische Antriebsvorrichtung 7 kann mit weiteren, rotierenden Teilen verbunden sein, zum Beispiel mit einer Pumpe. Die gesamte rotierende Anordnung kann von einer Vielzahl von Magnetlagern 6 berührungsfrei gelagert sein, welche Magnetlager 6 alle von einer Anordnung gemäss Fig. 1 angesteuert sind, indem die Vielzahl der Magnetlager 6 über Magnetlagersteller 3 mit dem Zwischenkreis 2a verbunden sind. Im Ausführungsbeispiel gemäss Fig. 1 ist der Übersichtlichkeit halber nur eine einzige berührungsfreie Lagerstelle dargestellt. Zur vollständig berührungslosen Lagerung einer rotierenden Welle sind jedoch zumindest zwei, in axialer Richtung versetzt angeordnete Lagerstellen mit insgesamt vier Magnetlager 6, je zwei in X- und Y-Richtung wirkend, erforderlich. Die Drehzahl des Rotors wird mit einem Winkel- oder Drehzahlsensor 9f erfasst und über eine elektrische Leitung 9g der Anhaltesteuervorrichtung 8 zugeführt.

Ein mit dem Zwischenkreis 2a verbundener Spannungswandler 4 versorgt über eine elektrische Leitung 4a die Anhaltesteuervorrichtung 8 mit elektrischer Energie. Der Spannungswandler 4 ist als ein getakteter Weitbereichseingangs-DC/DC-Wandler ausgestaltet und ist in der Lage, aus der am Zwischenkreis 2a anliegenden, je nach Betriebszustand in einem weiten Bereich schwankenden Spannung, eine annähernd konstante Spannung zu erzeugen und damit die Anhaltesteuervorrichtung 8 zu versorgen. Es ist insbesondere wichtig, dass die Anhaltesteuervorrichtung 8 auch bei einer sehr geringen Zwischenkreisspannung noch zuverlässig betreibbar ist. Die am Zwischenkreis 2a anliegende Spannung wird von einem Spannungssensor 9b erfasst und über eine elektrische Signalleitung 9d der Überwachungsvorrichtung 9 zugeführt, welche die ermittelten Spannungswerte der Anhaltesteuervorrichtung 8 über die Signalleitung 9e zuführt. Sobald die Anhaltesteuervorrichtung 8 einen Netzausfall oder eine Netzunterspannung detektiert, wird die Antriebsregelungsvorrichtung 2b sowie die Magnetlagersteller 3 von der Anhaltesteuervorrichtung 8 über Steuerleitungen 8a, 8b, 8c angesteuert, bis die rotierende Welle zum Stillstand und in eine definierte Ruhelage gebracht worden ist. Die Anhaltesteuervorrichtung 8 kann über eine Signalleitung 8d ein Fehlersignal einer übergeordneten Überwachungsvorrichtung übermitteln.

Die Antriebsregelungsvorrichtung 2b ist als Vektorregelungsvorrichtung 2b ausgestaltet, die nach dem Verfahren der feldorientierten Steuerung bzw. Regelung arbeitet, weil es so möglich ist, während des Umkehrbetriebs des Antriebsumrichters 2 aus der tieferen Motorenspannung der Antriebsvorrichtung 7 eine höhere Zwischenkreisspannung zu erzeugen und diese Zwischenkreisspannung aufrechtzuerhalten bis die Drehzahl der rotierenden Welle Null oder zumindest annähernd Null ist.

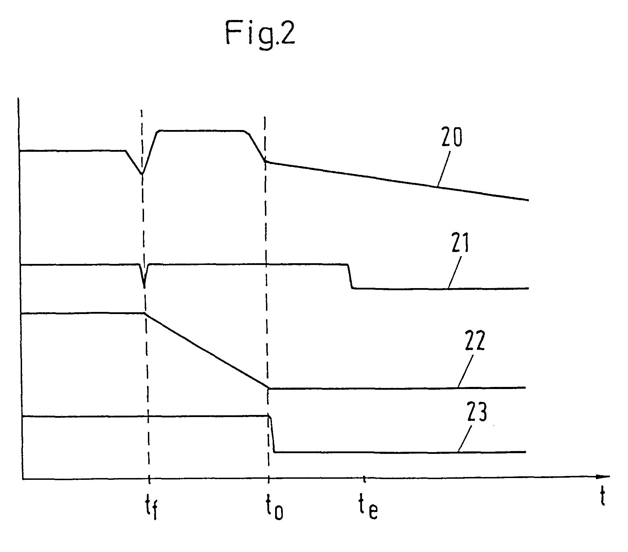

Das Diagramm gemäss Fig. 2 zeigt an einem beispielhaften Anhaltevorgang wichtige Systemgrössen in Funktion der Zeit. Die Kurve 20 stellt den Spannungsverlauf des Zwischenkreises 2a in Funktion der Zeit dar. Auf Grund eines Netzausfalles bricht die Zwischenkreisspannung zusammen, was vom Sensor 9b überwacht und der Anhaltesteuervorrichtung 8 übermittelt wird. Zum Zeitpunkt tf unterschreitet die Zwischenkreisspannung einen vorgebbaren Spannungswert, worauf die Anhaltesteuervorrichtung 8 aktiviert wird um die Antriebsvorrichtung 7 zum Stillstand zu bringen. Die Kurve 22 beschreibt die Drehzahl der Antriebsvorrichtung 7 in Funktion der Zeit, wobei die Drehzahl zwischen dem Zeitpunkt tf und dem Zeitpunkt to bis zum Wert Null absinkt, sodass die Antriebsvorrichtung 7 zum Zeitpunkt to zum Stillstand gekommen ist. Während der Zeitspanne zwischen tf und to wird der Antriebsumrichter 2 durch die Anhaltesteuervorrichtung 8 derart als ein gesteuerter Gleichrichter betrieben, dass die tiefere Motorspannung der Asynchronmaschine 7 in eine höhere Zwischenkreisspannung transformiert wird, sodass diese Zwischenkreisspannung, wie aus dem Kurvenverlauf 20 ersichtlich, während der betrachteten Zeitspanne teilweise einen höheren Spannungswert aufweist, als die Zwischenkreisspannung vor dem Zeitpunkt tf. Dabei wird die Asynchronmaschine 7 durch die Vektorregelungsvorrichtung 2b mit einem Vektorregelverfahren betrieben, um der Asynchronmaschine 7 geregelt kinetische Energie zu entziehen, diese gesteuert abzubremsen, und die entzogenen Energie in elektrische Energie umzuwandeln. Im dargestellten Ablaufbeispiel eines Anhaltevorganges wird die Spannung des Zwischenkreises 2a während der gesamten Zeitspanne zwischen tf und to auf einem möglichst konstanten Wert gehalten. Dabei wird die Anhaltesteuervorrichtung 8 sowie die Magnetlagersteller 3 über den Zwischenkreis 2a mit elektrischer Energie versorgt. Die Magnetlagersteller 3 werden über die Steuerleitungen 8b, 8c derart von der Anhaltesteuervorrichtung 8 angesteuert, dass, wie im Kurvenverlauf 23 dargestellt, die Lage der rotierenden Welle zumindest bezüglich der Y-Richtung bis zum Ablauf des Zeitpunktes to beibehalten wird, und daraufhin die Lage der stillstehenden Welle abgesenkt wird, bis die Welle sich in einer Ruhelage befindend auf einem Lagerteil aufliegt. Der Zwischenkreis 2a weist zum Zeitpunkt to annähernd eine Nennspannung auf, sodass die sich im Zwischenkreis 2a, im Antriebsumrichter 2, im Magnetlagersteller 3 oder im Spannungswandler 4 befindlichen Energiespeicher wie Kondensatoren zum Zeitpunkt to noch annähernd vollständig geladen sind. Diese gespeicherte Energie wird im dem Zeitpunkt to folgenden Zeitabschnitt verwendet, um die Anhaltesteuervorrichtung 8 sowie die Magnetlagersteller 3 weiterhin mit Energie zu versorgen, um die Welle nach dem Stillstand in eine Ruhelage zu bringen. Nachdem der Anhaltevorgang derart abgeschlossen ist, wird, wie aus der ein Fehlersignal darstellenden Kurve 21 ersichtlich, zum Zeitpunkt te ein Fehlersignal über die Signalleitung 8d einer übergeordneten Überwachungsvorrichtung mitgeteilt. Nach dem Zeitpunkt to sinkt die Zwischenkreisspannung entsprechend dem Verlauf der Kurve 20 zunehmend ab.

Das in Fig. 2 dargestelle Ausführungsbeispiel eines Anhalteverfahrens weist die folgenden Schritte auf:
1. Detektion einer Netzunterspannung oder eines Netzausfalles
2. Regeneratives Abbremsen der Antriebsmaschine 7 unter Erzeugung elektrischer Energie bis die Drehzahl des Rotors Null oder annähernd Null beträgt
3. Absenken des Rotors durch die Magnetlager 6
4. Übermittlung einer Fehlermeldung an eine übergeordnete Steuerung

Die Spannung im Zwischenkreis 2a kann während dem regenerativ wirkenden Arbeitsmodus durch das Vektorregelverfahren derart geregelt werden, dass diese Spannung im Zeitraum zwischen tf und to regeltechnisch optimiert wird, um einen möglichst grossen Energieanteil in den jeweiligen Energiespeichern einzulagern, damit nach dem Zeitpunkt to ausreichend Energie zum Betreiben der Anhaltesteuervorrichtung 8 sowie der Magnetlagersteller 3 zur Verfügung steht.

Dank der verwendeten Vektorregelung kann über einen grossen Drehzahlbereich des Rotors eine hohe Spannung am Zwischenkreis 2a erzeugt werden.

Es kann sich als vorteilhaft erweisen zwischen dem Magnetlagersteller 3 und den Magnetlagern 6, wie in Fig. 1 dargestellt, einen zusätzlichen Spannungswandler 5 anzuordnen, um die Magnetlager 6 mit einer genügend hohen Spannung zu versorgen.

In Fig. 2 ist nur ein Anhaltevorgang aus einer Vielzahl möglicher Zeitverläufe dargestellt. So könnte zum Beispiel das Absenken der Rotorwelle auch bereits dann eingeleitet werden, wenn die Drehzahl einen vorgebbaren Sollwert unterschreitet, und zum Beispiel einen Wert von 1% der Nenndrehzahl aufweist. Dabei würde die Rotorwelle, nach dem Ausschalten der Magnetlager 3, mit einer geringen Drehzahl drehend mit dem feststehenden Lager in Berührung kommen und bis zum Stillstand auslaufen. Insbesondere bei sehr schwer ausgestalteten Rotorwellen besteht die Möglichkeit, dass die im Zwischenkreis gespeicherte Energie nicht genügt, um den Rotor vor dem Absenken vollständig zum Stillstand zu bringen, sodass das feststehende Notlauflager derart auszugestaltet ist, dass der Rotor ohne oder mit nur sehr geringer Beschädigung des Lagers bis zum Stillstand auslaufen kann.

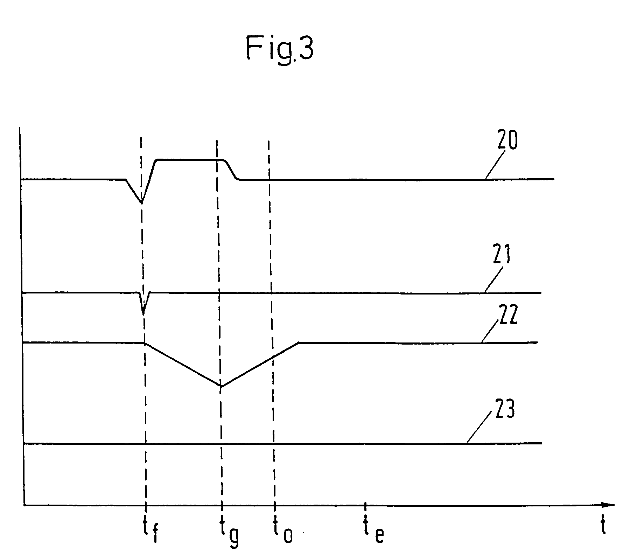

Fig. 3 zeigt ein Betriebsverfahren zum Überbrücken einer nur sehr kurz dauernden Netzstörung. Die Kurve 20 stellt wiederum den Spannungsverlauf des Zwischenkreises 2a in Funktion der Zeit dar. Auf Grund eines Absinkens der Netzspannung bricht die Zwischenkreisspannung zusammen, was vom Sensor 9b überwacht wird. Zum Zeitpunkt tf unterschreitet die Zwischenkreisspannung einen vorgebbaren Spannungswert, worauf die Anhaltesteuervorrichtung 8 aktiviert wird. Der Antriebsumrichter 2 wird in einen regenerativ wirkenden Arbeitsmodus umgeschaltet, um die Zwischenkreisspannung anzuheben und damit die elektrische Versorgung der die Magnetlager 6 speisenden Stellvorrichtungen 3 sowie der Anhaltesteuervorrichtung 8 zu gewährleisten. Zum Zeitpunkt tg stellt der Spannungssensor 9a fest, dass die Netzstörung beendet ist. Daraufhin wird der Antriebsumrichter 2 durch die Anhaltesteuervorrichtung 8 in einen auf die Antriebsvorrichtung 7 antreibend wirkenden Arbeitsmodus umgeschaltet, wobei, wie in Kurve 20 dargestellt, die Zwischenkreisspannung auf einen Normalwert absinkt, und, wie in Kurve 22 dargestellt, die Drehzahl des rotierenden Teils wieder auf eine Nenndrehzahl ansteigt. Die Kurve 23, welche die Lage des rotierenden Teils in Y-Richtung darstellt, erfährt nie eine Änderung, was bedeutet, dass die Lage des rotierenden Teils trotz dem Auftreten einer Netzstörung keine Änderung erfährt. Die Zeitpunkte to und te sind dargestellt um den Unterschied zum Ablauf gemäss Fig. 2 zu verdeutlichen. Diese Zeitpunkte sind jedoch für das Verfahren gemäss Fig. 3 bedeutungslos. Gemäss dem Verlauf der Kurve 21 wird kein Fehlersignal einer übergeordneten Vorrichtung übermittelt.

Das in Fig. 3 dargestellte Ausführungsbeispiel eines Betriebsverfahrens weist die folgenden Schritte auf:
1. Detektion einer Netzstörung
2. Regeneratives Abbremsen der Antriebsmaschine 7 unter Erzeugung elektrischer Energie
3. Detektion des Endes der Netzstörung
4. Kontrolle der Drehzahl und der Lage des Rotors
5. Falls es die Systemstabilität erlaubt:
   Antreiben der Antriebsmaschine 7 mit aus dem Netz bezogener Energie und beschleunigen des Rotors auf eine Nenndrehzahl ansonst:
   weiteres regeneratives Abbremsen der Antriebsmaschine 7 bis die Drehzahl des Rotors Null oer annähernd Null beträgt und anschliessendes Absenken des Rotors durch die Magnetlager 6 in eine Ruhelage.

Es versteht sich, dass die Erfindung nicht auf die in dem Ausführungsbeispiel erwähnte Asynchronmaschine beschränkt ist. Die mit dem erfindungsgemässen Verfahren betriebenen Antriebsvorrichtung 7 kann natürlich auch eine andere Art von elektrischer Maschine sein, insbesondere eine Synchronmaschine oder eine bürstenlose Gleichstrommaschine oder eine Reluktanzmaschine. Die vornestehenden Erläuterungen anhand des Ausführungsbeispiels gelten in sinngemäss gleicher Weise auch für bürstenlose Gleichstrommaschinen, Reluktanzmaschinen, Synchronmaschinen und elektrische Maschinen allgemein. Die Anwendung der feldorientierten Regelung für die Steuerung von Synchronmaschinen wird beispielsweise in dem bereits vorne zitierten Buch "Digitale Regelung elektrischer Antriebe" behandelt.

## Patentansprüche

1. Verfahren zum Betreiben einer magnetgelagerten, elektromotorischen Antriebsvorrichtung (7) bei einer Netzstörung, bei welchem Verfahren die Netzstörung erkannt wird, der die Antriebsvorrichtung (7) speisende Antriebsumrichter (2) daraufhin zur elektrischen Energieerzeugung in einem regenerativ wirkenden Arbeitsmodus betrieben wird, und die elektrische Energie einer ein Magnetlager (6) speisenden Stellvorrichtung (3) zugeführt wird, **dadurch gekennzeichnet, dass** die im regenerativ wirkenden Arbeitsmodus erzeugte elektrische Energie ferner einer Anhaltesteuervorrichtung (8) zugeführt wird, und dass zum regenerativen Abbremsen der Antriebsvorrichtung (7) ein feldorientiertes Regelverfahren bzw. eine Vektorregelung verwendet wird.

2. Verfahren nach Anspruch 1, **dadurch gekennzeichnet, dass** durch die Anhaltsteuervorrichtung (8) der rotierbare Teil der Antriebsvorrichtung (7) kontrolliert in eine Ruhelage gebracht wird.

3. Verfahren nach Anspruch 1, **dadurch gekennzeichnet, dass**, sofern der rotierbare Teil der Antriebsvorrichtung (7) beim Ende der Netzstörung noch magnetisch gelagert ist, der Antriebsumrichter (2) durch die Anhaltesteuervorrichtung (8) in einen antreibend wirkenden Arbeitsmodus umgeschaltet wird, damit die Antriebsvorrichtung (7) wieder auf eine Nenndrehzahl gebracht wird.

4. Verfahren nach einem der Ansprüche 1 bis 3, **dadurch gekennzeichnet, dass** während dem regenerativen Abbremsen der Antriebsvorrichtung (7) die an den Zwischenkreis (2a) abgegebene Spannung maximiert wird, und der Spannungswert insbesondere über einen während einem Normalbetrieb im Zwischenkreis (2a) anliegenden Wert angehoben wird.

5. Verfahren nach einem der Ansprüche 1 bis 4, **dadurch gekennzeichnet, dass** während dem regenerativen -Abbremsen der Antriebsvorrichtung (7) ein im Antriebsumrichter (2) und/oder in der Stellvorrichtung (3) und/oder im Spannungswandler (4) angeordneter Energiespeicher auf einen möglichst hohen Wert geladen wird.

6. Verfahren nach einem der Ansprüche 1 bis 5, **dadurch gekennzeichnet, dass** beim Unterschreiten einer vorgebbaren Drehzahl oder bei Stillstand der Antriebsvorrichtung (2) mit Hilfe der im Zwischenkreis (2a) verfügbaren, gespeicherten Restenergie die Magnetlager (6) kontrolliert deaktiviert und dabei die rotierbaren Teile in eine Ruhelage gebracht werden.

7. Verfahren nach einem der Ansprüche 1 bis 6, **dadurch gekennzeichnet, dass** mit Hilfe der gespeicherten Restenergie ein Fehlersignal erzeugt und dieses einer übergeordneten Überwachungsvorrichtung übermittelt wird.

## Claims

1. Method for the operation of a magnetically suspended, electromotoric drive apparatus (7) in the event of a power supply disturbance in which method the power supply disturbance is detected; the drive converter (2) feeding the drive apparatus (7) is thereupon operated in a regeneratively acting mode of operation for the electrical generation of energy; and the electrical energy is supplied to a driver (3) feeding a magnetic bearing (6) **characterised in that** the electrical energy generator in the regeneratively acting mode of operation is furthermore supplied to a stopping control apparatus (8), and **in that** a field orientated control method, i.e. a vector control is used.

2. Method in accordance with claim 1 **characterised in that** the rotatable part of the drive apparatus (7) is brought into a rest position by the stopping control apparatus (8) in a controlled manner.

3. Method in accordance with claim 1 **characterised in that**, in so far as the rotatable part of the drive apparatus (7) is still magnetically suspended at the end of the mains disturbance, the drive converter (2) is switched over to a drivingly acting mode of operation by the stopping control apparatus (8) in order that the drive apparatus (7) is again brought to a nominal speed of rotation.

4. Method in accordance with one of the claims 1 to 3 **characterised in that** the voltage transmitted to the intermediate circuit (2a) is maximised during the regenerative braking of the drive apparatus (7) and the voltage value is in particular raised above a value present at the intermediate circuit (2a) during a normal operation.

5. Method in accordance with one of the claims 1 to 4 **characterised in that** an energy store arranged in the drive converter (2) and/or in the driver (3) and/or in the voltage converter (4) is charged to as high a value as possible during the regenerative braking of the drive apparatus (7).

6. Method in accordance with one of the claims 1 to 5 **characterised in that** when the speed of rotation of the drive apparatus (2) drops below a predeterminable value or the drive apparatus (2) comes to a standstill, the magnetic bearings (6) are deactivated in a controlled manner with the help of the stored residual energy available in the intermediate circuit (2a) and during this the rotating parts are brought into a rest position.

7. Method in accordance with one of the claims 1 to 6 **characterised in that** a fault signal is produced and transmitted to a higher level monitoring apparatus with the help of the stored residual energy.

## Revendications

1. Procédé pour le fonctionnement d'un dispositif d'entraînement électromoteur à palier magnétique (7) pendant une panne de courant, dans lequel la panne de courant est détectée, le mutateur d'entraînement (2) alimentant le dispositif d'entraînement (7) est ensuite amené à fonctionner pour la production d'énergie électrique selon un mode de travail régénératif, et l'énergie électrique est amenée à un dispositif de positionnement (3) alimentant un palier magnétique (6), **caractérisé en ce que** l'énergie électrique produite lors du mode de travail à effet régénératif est amenée en outre à un dispositif de commande d'arrêt (8) et **en ce que**, pour le freinage régénératif du dispositif d'entraînement (7), il est utilisé un procédé de réglage respectivement un réglage vectoriel à orientation de champ.

2. Procédé selon la revendication 1, **caractérisé en ce que** par le dispositif de commande d'arrêt (8), la partie tournante du dispositif d'entraînement (7) est amenée d'une manière contrôlée dans une position de repos.

3. Procédé selon la revendication 1, **caractérisé en ce que**, dans la mesure où la partie tournante du dispositif d'entraînement (7), à la fin de la panne de courant, est encore logée magnétiquement, le mutateur d'entraînement (2) est commuté par le dispositif. de commande d'arrêt (8) en un mode de travail à effet d'entraînement pour que le dispositif d'entraînement (7) soit de nouveau amené à une vitesse de rotation nominale.

4. Procédé selon l'une des revendications 1 à 3, **caractérisé en ce que** pendant le freinage régénératif du dispositif d'entraînement (7), la tension émise au circuit intermédiaire (2a) est amenée à un maximum, et **en ce que** la valeur de tension est relevée notamment au-delà d'une valeur s'appliquant pendant un fonctionnement normal au circuit intermédiaire (2a).

5. Procédé selon l'une des revendications 1 à 4, **caractérisé en ce que** pendant le freinage régénératif du dispositif d'entraînement (7), un dispositif de stockage d'énergie disposé dans le mutateur d'entraînement (2) et/ou le dispositif de positionnement (3) et/ou le transformateur de tension (4) a une valeur la plus élevée possible.

6. Procédé selon l'une des revendications 1 à 5, **caractérisé en ce que** lors du passage en dessous d'une vitesse de rotation prédéfinie ou lors de l'arrêt du dispositif d'entraînement (2), les paliers magnétiques (6) sont désactivés d'une manière contrôlée à l'aide de l'énergie restante stockée, disponible dans le circuit intermédiaire (2a) et, ce faisant, les parties tournantes sont amenées dans une position de repos.

7. Procédé selon l'une des revendications 1 à 6, **caractérisé en ce qu'**il est produit à l'aide dé l'énergie restant stockée un signal d'erreur et que celui-ci est transmis à un dispositif de surveillance subordonné.
